# EUROPEAN PATENT APPLICATION

(11) **EP 4 807 486 A1**
(43) Date of publication of application: **16.09.2026**
(21) Application number: 25275015.3
(22) Date of filing: 12.03.2025
(51) Int. Cl.: G05D 1/698

(54) **DECISION MAKING BASED ON AGGREGATED TARGET DATA**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Method, platforms and system are described comprising: organising a plurality of platforms as a graph of nodes and edges; obtaining local object data at one or more of said plurality of platforms; communicating information between platforms; locally generating, at one or more of said platforms, aggregated object data for the respective platform based on the respective local object data and the information communicated between platforms; locally generating, at one or more of said platforms, target information for one or more targets based, at least in part, on the respective aggregated object data; and taking one or more decisions at one or more of said platforms based, at least in part, on the target information generated at the respective platform.

## Description

### FIELD

The present invention relates to the control of platforms, such as uncrewed vehicles and to systems including a plurality of such platforms. In particular the present invention relates to decision making at such platforms based on target data.

### BACKGROUND

A platform, such as an uncrewed vehicle, can generate target data and take decisions, for example as part of a battlefield scenario, based on the generated target data. It can be difficult for such platforms to respond to changes in an operating environment.

### SUMMARY

According to a first aspect, there is provided a method comprising: obtaining, at a first platform, local object data based, at least in part, on data from one or more sensors of the first platform; receiving, at the first platform, remote information (e.g. aggregated object data) from each of one or neighbour platforms, wherein the first platform and the one or more neighbour platforms form at least a part of a plurality of platforms organised as a graph of nodes and edges, wherein each platform of the plurality forms one of the said nodes and said edges represent communication links (e.g. local, short-range communication links) between said nodes, wherein the first platform has a position within the graph of nodes; generating, at the first platform, aggregated object data for the first platform based on the local object data and the remote information in accordance with a message aggregation scheme; providing information (e.g. aggregated object data) to one or more of said neighbour platforms for use as remote information by said neighbour platforms; generating, at the first platform, target information for one or more targets based, at least in part, on the aggregated object data, wherein the target information comprises target position data and/or target identification data ;and taking one or more decisions based, at least in part, on said target information.

The method may further comprise receiving an algorithm for taking one or more of said decisions. The algorithm may be a machine-learning algorithm (such as a multi-agent deep reinforcement learning, MADRL, algorithm), a hard-coded algorithm, or a combination thereof.

The local object data may comprise one or more of: a position of one or more other platforms of the plurality; a direction from the first platform to each of one or more detected objects; a direction from the first platform to each of one or more neighbour platforms; movement data for the first platform; a monotonically decaying value representing a last sighting of each of one or more detected objects; an identity of each of one or more detected objects; an object type of each of one or more detected objects; and a node degree indicating a number of neighbour platforms in communication with the first platform.

The aggregated object data for the first platform may include data relating to the platforms of the plurality, including the first platform. Moreover, the data relating to the platforms of the plurality comprises one or more of: a location of the respective platform; movement data relating to the respective platform; and a bearing of one or more of said targets from the respective platform.

In some example embodiments, generating said aggregated object data for the first platform comprises one or more of: determining a maximum and/or a minimum of a plurality of datapoints; generating an average of a plurality of datapoints; generating a weighted average of a plurality of datapoints; determining an average position of a plurality of sensor measurements that identify at least one of one or more targets; and determining an average position of a plurality of sensor measurements that do not identify at least one of one or more targets.

The method may further comprise receiving an algorithm for implementing said message aggregation scheme. The algorithm may be a machine-learning algorithm (e.g. using graph machine-learning approaches), a hard-coded algorithm, or a combination thereof.

In some example embodiments, said one or more decisions comprise changes to one or more of: a position of the first platform relative to one or more targets identified from said aggregated target data; a speed of movement of the first platform; and a direction of movement of the first platform. Alternatively, or in addition, said one or more decisions include taking an action in relation to one or more targets identified from said aggregated target data.

The one or more decisions may be based, in part, on outcomes of preceding actions.

The target information may comprise target status data.

In some example embodiments, the one or more sensors comprise one or more of: one or more imaging devices; one or more radio frequency sensors; and one or more radar sensors.

According to a second aspect, there is provided a method comprising: organising a plurality of platforms as a graph of nodes and edges, wherein each platform of the plurality forms one of the said nodes and said edges represent communication links (e.g. local, short-range communication links) between said nodes; obtaining local object data at one or more of said plurality of platforms based on data from one or more sensors of the respective platforms; communicating information between platforms (the information communicated between platforms may comprise aggregated object data generated at the respective platforms); locally generating, at one or more of said platforms, aggregated object data for the respective platform based on the respective local object data and the information communicated between platforms, in accordance with a message aggregation scheme; locally generating, at one or more of said platforms, target information for one or more targets based, at least in part, on the respective aggregated object data, wherein the target information comprises target position data and/or target identification data (the target information may also include target status data); and taking one or more decisions at one or more of said platforms based, at least in part, on the target information generated at the respective platform.

Some example embodiments further comprise providing an algorithm for taking said decisions to one or more of said platforms. The method may further comprise training said algorithm for taking said decisions.

The aggregated object information may be based on one or more of: a maximum and/or a minimum of a plurality of datapoints; an average of a plurality of datapoints; a weighted average of a plurality of datapoints; an average position of a plurality of sensor measurements that identify at least one of one or more targets; and an average position of a plurality of sensor measurements that do not identify at least one of one or more targets.

Some example embodiments further comprise providing an algorithm for implementing said message aggregation scheme to one or more of said platforms. The method may further comprise training said algorithm for implementing said message aggregation scheme.

The one or more decisions may comprise changes to one or more of: a position of the first platform relative to one or more targets identified from said aggregated target data; a speed of movement of the first platform; and a direction of movement of the first platform. Alternatively, or in addition, the one or more decisions may include taking an action in relation to one or more targets identified from said aggregated target data. Alternatively, or in addition, the one or more decisions may be based, in part, on outcomes of preceding actions.

The one or more sensors may comprise one or more of: one or more imaging devices; one or more radio frequency sensors; and one or more radar sensors.

According to a third aspect, there is provided a first platform (e.g. an uncrewed aerial vehicle, an uncrewed ground vehicle or an uncrewed underwater vehicle), the first platform comprising: one or more sensors (e.g. one or more imaging devices, one or more radio frequency sensors and/or one or more radar sensors) for obtaining local object data relating to the first platform; a communication module for receiving remote information from each of one or more neighbour platforms and for providing information to one of more of said neighbour platforms, wherein the first platform and the one or more neighbour platforms form at least a part of a plurality of platforms organised as a graph of nodes and edges, wherein each platform of the plurality forms one of the said nodes and said edges represent communication links between said nodes, wherein the first platform has a position within the graph of nodes; a control module for generating aggregated object information for the first platform based on the local object data and the remote information in accordance with a message aggregation scheme; a target module for generating target information for one or more targets based, at least in part, on the aggregated object data, wherein the target information comprises target position data and/or target identification data; and a processor for taking one or more decisions based, at least in part, on said the aggregated target information for the first platform.

The first platform may be configured (e.g. using the control module) to receive an algorithm for taking one or more of said decisions.

The local object data may comprise one or more of: a position of one or more other platforms of the plurality; a direction from the first platform to each of one or more detected objects; a direction from the first platform to each of one or more neighbour platforms; movement data for the first platform; a monotonically decaying value representing a last sighting of each of one or more detected objects; an identity of each of one or more detected objects; an object type of each of one or more detected objects; and a node degree indicating a number of neighbour platforms in communication with the first platform.

The aggregated object data for the first platform may include data relating to the platforms of the plurality, including the first platform. Moreover, the data relating to the platforms of the plurality comprises one or more of: a location of the respective platform; movement data relating to the respective platform; and a bearing of one or more of said targets from the respective platform.

The control module may be configured to generate said aggregated object data for the first platform by: determining a maximum and/or a minimum of a plurality of datapoints; generating an average of a plurality of datapoints; generating a weighted average of a plurality of datapoints; determining an average position of a plurality of sensor measurements that identify at least one of one or more targets; and/or determining an average position of a plurality of sensor measurements that do not identify at least one of one or more targets.

The first platform may be configured (e.g. using the control module) to receive an algorithm for implementing said message aggregation scheme.

In some example embodiments, said one or more decisions comprise changes to one or more of: a position of the first platform relative to one or more targets identified from said aggregated target data; a speed of movement of the first platform; and a direction of movement of the first platform. Alternatively, or in addition, said one or more decisions include taking an action in relation to one or more targets identified from said aggregated target data.

The one or more decisions may be based, in part, on outcomes of preceding actions.

According to a fourth aspect, there is provided a system comprising a plurality of first platforms as set out above with respect to the third aspect.

According to a fifth aspect, there is provided computer-readable instructions which, when executed by a computing apparatus, cause the computing apparatus to perform (at least) any method as described herein (including the methods of the first and second aspects described above).

According to a sixth aspect, there is provided a computer-readable medium (such as a non-transitory computer-readable medium) comprising program instructions stored thereon for performing (at least) any method as described herein (including the methods of the first and second aspects described above).

According to a seventh aspect, there is provided an apparatus comprising: at least one processor; and at least one memory including computer program code which, when executed by the at least one processor, causes the apparatus to perform (at least) any method as described herein (including the methods of the first and second aspects described above).

### BRIEF DESCRIPTION OF THE FIGURES

Embodiments of the invention will now be described by way of example only with reference to the figures, in which:
Figure 1 is a block diagram of a system in accordance with an example embodiment;
Figure 2 is a flow chart showing an example operation of the circuit of Figure 1;
Figure 3 is a block diagram of a system in accordance with an example embodiment;
Figure 4 is a flow chart showing an example operation of the system of Figure 3 in accordance with an example embodiment;
Figure 5 is a block diagram of a system in accordance with an example embodiment;
Figure 6 is a flow chart in accordance with an example embodiment;
Figure 7 is a block diagram of a system model in accordance with an example embodiment;
Figure 8 shows a neural network used in some example embodiments;
Figure 9 is a flow chart in accordance with an example embodiment;
Figure 10 is a block diagram of a system model in accordance with an example embodiment;
Figures 11 to 14 are flow charts in accordance with example embodiments; and
Figure 15 shows a system that can be used in implementations of example embodiments.

### DETAILED DESCRIPTION

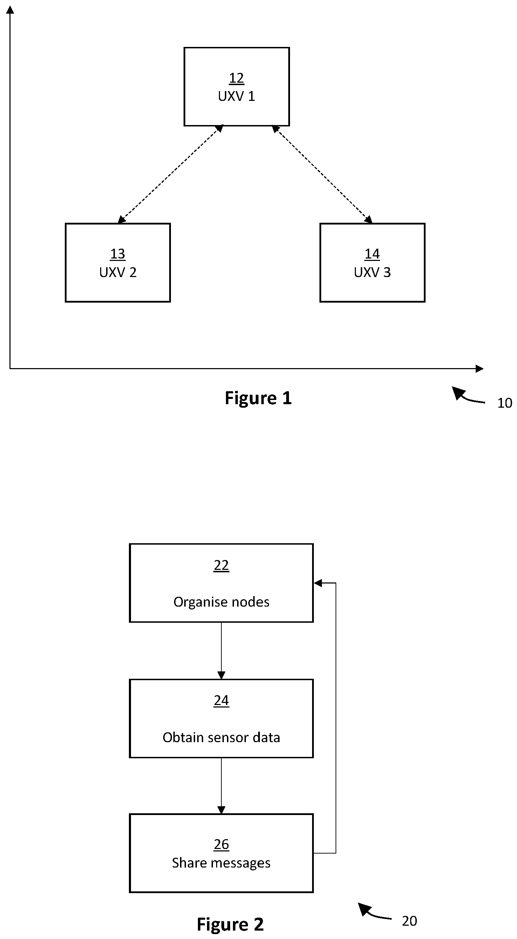

Figure 1 is a block diagram of a system, indicated generally by the reference numeral 10, in accordance with an example embodiment. The system 10 comprises a first uncrewed vehicle 12, a second uncrewed vehicle 13 and a third uncrewed vehicle 14. The uncrewed vehicles 12 to 14 may, for example, include uncrewed aerial vehicles (UAVs), uncrewed ground vehicles (UGVs), uncrewed underwater vehicles (UUVs) or combinations thereof. The uncrewed vehicles 12 to 14 may include airborne platforms, such as missiles. Other forms of uncrewed vehicles that could be used will be apparent to the skilled person. The various uncrewed vehicles are generally reference herein with the acronym UXV.

The plurality of uncrewed vehicles of the system 10 form a "swarm" of uncrewed vehicles that are organised as a graph of nodes and edges, wherein each uncrewed vehicle of the plurality forms one of the said nodes and said edges represent communication links between said nodes. This is represented schematically in Figure 1 by plotting the positions of the UXVs 12 to 14 relative to an x-axis and a y-axis.

In the example system 10, the first uncrewed vehicles 12 is in two-way communication with both the second uncrewed vehicle 13 and the third uncrewed vehicle 14, but the second and third uncrewed vehicles are not in direct communication; by way of example, a physical barrier or some other impediment may exist between the current positions of the second and third uncrewed vehicles.

The uncrewed vehicles of the system 10 may form part of a swarm of uncrewed vehicles as part of a battlefield deployment. Of course, a real system is likely to include more than the three uncrewed vehicles of the system 10. It should be noted that some multi-domain and data-enabled battlespaces pose challenges for the control of uncrewed vehicles. This can be compounded by sensors, such as radars, increasingly demonstrating the ability to adapt their surveillance strategies to maximise performance.

Figure 2 is a flow chart, indicated generally by the reference numeral 20, showing an example operation of the circuit of Figure 1.

The flow chart 20 starts at step 22, where nodes of a plurality of uncrewed vehicles (such as the UXVs 12, 13 and 14) are organised. The step 22 may include defining a position of each of the uncrewed vehicles within the swarm (e.g. relative to each other).

At step 24, some or all of the uncrewed vehicles obtain sensor data. Such sensors may be used to obtain data relating, for example, to the physical and/or electromagnetic environment in which the respective uncrewed vehicle is operating, data regarding other uncrewed vehicles of the swarm and/or data relating to other devices (e.g. one or more targets). A particular uncrewed vehicle may take one or more actions in response to the sensor data.

At step 26, messages are shared with one or more other uncrewed vehicles of the swarm; said messages may include data, such as at least some of the sensor data obtained in step 24. Sharing messages can enable a particular uncrewed vehicle to take decisions based, at least part, on sensor data obtained from other uncrewed vehicles of the swarm. The messages may include information relating to characteristics of the physical and/or electromagnetic environment that that UXVs are operating in and/or information regarding potential threats. The messages may thereby include sensor data and/or higher-level salient information whose aggregation aids the situational awareness of the swam and/or of members of the swarm.

The flow chart 20 shows how the uncrewed vehicles of the system 10 (and similar systems) can communicate with neighbouring uncrewed vehicles of a swarm to transfer messages about the swarm, including under denied degraded intermittent or limited (DDIL) communication constraints in congested and/or contested electromagnetic environments. For example, even though there is no direct link between the second UXV 13 and the third UXV 14, information can be shared between those UXVs by sending sensor data (in step 24) via the first UXV 12. This is sometimes referred to as either multi-hop communication or beyond line-of-sight (BLOS) communication.

In this way, the system 10 enables graph-structured communications in which uncrewed vehicles of a swarm can communication with other uncrewed vehicles in the swarm via messages transmitted (in one or more hops) via neighbour devices in the swarm. For example, in the context of target detection, information concerning target sightings and movement across the graph-based swarm can be shared between nodes. This can be advantageous, for example, where at least one of the uncrewed vehicles of the swarm obtains noisy and/or partial data regarding the scene and/or where communications between nodes may be intermittent/unreliable.

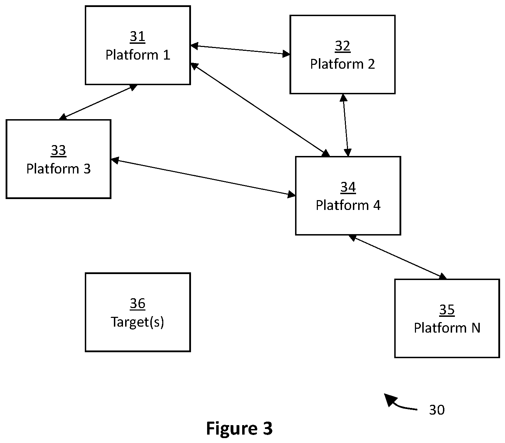

Figure 3 is a block diagram of a system, indicated generally by the reference numeral 30, in accordance with an example embodiment.

The system 30 comprises a first platform 31, a second platform 32, a third platform 33, a fourth platform 34, and a further (or nth) platform 35, that collectively form a swarm of platforms. The platforms may be uncrewed vehicles (and may therefore be similar to the uncrewed vehicles 12 to 14 described above). Each of the platforms 31 to 35 may, for example, be (or include) an uncrewed aerial vehicle (UAV), an uncrewed ground vehicle (UGV), an uncrewed underwater vehicles (UUV) or some similar uncrewed vehicle. The system 30 further comprises one or more targets 36. One or more of the one or more targets 36 may be mobile and may, for example, be an uncrewed vehicle or some other device. As discussed further below, the platforms 31 to 35 may be tasked with interacting with the target(s) 36 in some way (e.g. by detecting, tracking, interacting with, communicating with, moving or eliminating targets). The target(s) 36 may form part of a battlefield scenario). Alternatively, or in addition, the platforms 31 to 35 may be tasked with detecting and reacting to radar sensors (e.g. enemy radar sensors in a battlefield scenario).

As shown in Figure 3, the first platform 31 is in communication with each of second, third and fourth platforms. The second platform 32 is in communication with the first and fourth platforms. The third platform 33 is in communication with the first and fourth platforms. The fourth platform 34 is in communication with the first, second, third, fourth and nth platforms. The nth platform 35 is in communication with the fourth platform.

The swarm of platforms 31 to 35 provides a communication framework for interacting with target(s) (e.g. detecting, tracking and/or eliminating one or more targets). The swarm of platforms can communicate with neighbouring platforms in the swarm to transfer messages about the swarm, including the presence, position or other status of the target(s) 36, the presence, position or other status of radar sensors and/or the presence, position or status of platforms of the plurality.

Note that individual links between platforms may be unreliable (e.g. the connections may be intermittent), but some communications can generally be expected to take place, even if intermittent and/or of low quality. In-fact, expected unreliability, e.g. in the form of DDIL communication, can be part of a training phase for the swarm; suitable training arrangements are discussed in detail below.

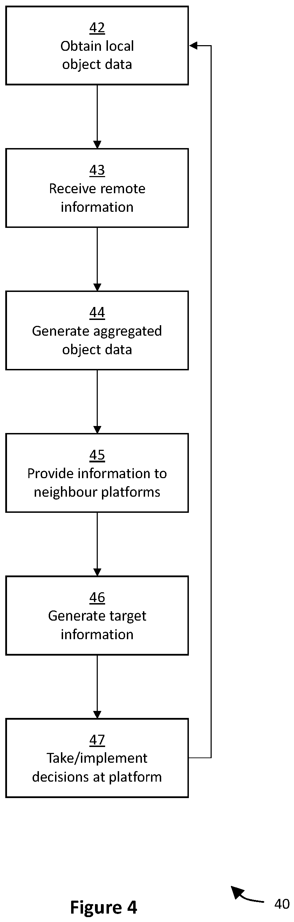

Figure 4 is a flow chart, indicated generally by the reference numeral 40, showing an example operation of the system of Figure 3 in accordance with an example embodiment. The flow chart 40 is described below from the viewpoint of the first platform 31 of the system 30, but the algorithm shown in the flow chart 40 may be implemented at multiple (e.g. all) platforms of the system 30.

The flow chart 40 starts at step 42, where local object data is obtained at the first platform based, at least in part, on data from one or more sensors of the first platform. The data obtained in the step 42 may include data relating to a scene, such as the electromagnetic environment (EME) of the first platform. The data may include data (e.g. radar data) relating to other devices, such as the target(s) 36 and/or radar sensors. The sensors may include one or more imaging devices and/or one or more radio frequency sensors (e.g. software defined radios) and/or one or more radar sensors.

Further examples of local observation data that might be obtained in step 42 include:
- a position of one or more platforms of the plurality (e.g. other platforms of a swarm) and/or one or more targets;
- a direction from the first platform to each of one or more detected objects (e.g. targets);
- a direction from the first platform to each of one or more neighbour platforms and/or one or more detected objects (e.g. targets);
- movement data for the first platform, such as speed, velocity, bearing, or any other spatial-temporal characteristic;
- movement data for one or more other platforms and/or one or more targets, such as speed, velocity, bearing, or any other spatial-temporal characteristic;
- a monotonically decaying value representing a last sighting of each of one or more detected objects (e.g. targets);
- one or more of an identity, an object type and a status of one or more detected objects (e.g. targets); and/or
- a node degree indicating a number of neighbour platforms in communication with the first platform.

At step 43, remote information is received at the first platform from each of one or neighbour platforms. As discussed above, the platforms 31 to 35 form at least part of a plurality of platforms organised as a graph of nodes and edges, wherein each platform of the plurality forms one of the said nodes and said edges represent communication links between said nodes. The remote data may be received from one or more platforms in direct contact with the first platform (e.g. one or more of the second, third and fourth platforms of the example system 30) and/or from one or more platforms not in direct contact with the first platform (such as the nth platform in the example system 30) via multi-hop communication.

The remote information (e.g. in the form of one or more messages as discussed above with reference to Figure 2) received from a particular other platform in step 43 may include one or more of:
- Data (e.g. object/target data) obtained by one or more sensors of that platform;
- Data (e.g. object/target data) obtained at that platform that has been processed in some way (e.g. to reduce data exchange requirements); and
- Aggregated object data (e.g. target data) originating from multiple platforms (e.g. aggregated sensor data or aggregated processed sensor data).

At step 44, aggregated object data is generated for the first platform based on the local object data (obtained in step 42) and the remote information (received in step 43). The aggregation is performed in accordance with a message aggregation scheme. As discussed elsewhere herein, an algorithm (e.g. a trained machine-learning algorithm, a hand-coded algorithm or a hybrid algorithm) may be provided to the respective platforms for performing the aggregation in step 44.

The aggregated data generated in step 44 may include data relating to the platforms of the plurality (including the first platform). For example, such data may include one or more of:
- a location of the respective platform; and
- movement data (e.g. speed, velocity, bearing or any other spatial-temporal characteristic) relating to the respective platform; and
- a bearing of one or more of targets from the respective platform.

Generating the aggregated data in step 44 may include one or more of:
- determining a maximum and/or a minimum of a plurality of datapoints;
- generating an average of a plurality of datapoints;
- generating a weighted average of a plurality of datapoints;
- determining an average position of a plurality of sensor measurements that identify at least one of one or more target objects; and
- determining an average position of a plurality of sensor measurements that do not identify at least one of one or more target objects.

It should be noted that both the local observations of step 42 and the remote data of step 43 may include data relating to one or more targets (such as the target 36).

At step 45, information is provided to one or more (e.g. all) neighbour platforms of the first platform for use as remote information by the respective neighbour platforms (and may be the remote data received, at the respective node, in step 43). The information provided in the step 45 may be aggregated object data (e.g. the aggregated object data generated in step 44), but this is not essential for all example embodiments; for example, raw sensor data or processed sensor data may be provided.

At step 46, target information for one or more targets is generated at the first platform. The target information is based, at least in part, on the aggregated object data generated in step 44. The target information comprises one or more of: target position data, target identification data and target status information.

At step 47, one or more decisions may be taken (and may be implemented) based, at least in part, on the target information (as generated in step 46) for the first platform, thereby enabling co-ordinated decision-making in a decentralised swarm of platforms. Example decisions include changing one or more of: a position of the first platform relative to one or more targets identified from said aggregated data; moving the first platform within the graph of nodes; a speed of movement of the first platform; a direction of movement of the first platform. Alternatively, or in addition, the decision may include taking an action in relation to one or more targets identified from said aggregated target data (such a destroying the or each target). Decisions may be based, in part, on outcomes of preceding actions (such as whether or not a target has been destroyed). The algorithm for making the decisions may be received at the platform and, as discussed in detail below, may be a trained algorithm.

At least some of the platforms of a swarm may have independent decision-making capability (thereby enabling distributed decision-making). For example, the swarm can be trained to detect and track targets (such as the target 36) using a machine learning approach that combines MADRL (such as Multi Agent Proximal Policy Optimisation, MAPPO) and Graph Machine Learning, GML (e.g. graph neural network, GNN). This enables GML-based communication (between nodes) and MADRL based actuation (at different nodes/platforms), for example providing platforms in a particular pattern. The MADRL component may consider both local observations (from local sensors - see step 42) and aggregated messages obtained via GML approaches (from other nodes of the graph - see step 43).

Decision-making can take place at platforms even if communications with some (or all) other nodes is not possible. The distributed nature of aggregation of messages means that messages will tend to get through so that good (and consistent) decisions can be reached at different nodes.

In some example embodiments all nodes (e.g. all platforms of the system 30) have decision-making capabilities, but this is not essential to all example embodiments. For example, some platforms may be provided primarily for obtaining data.

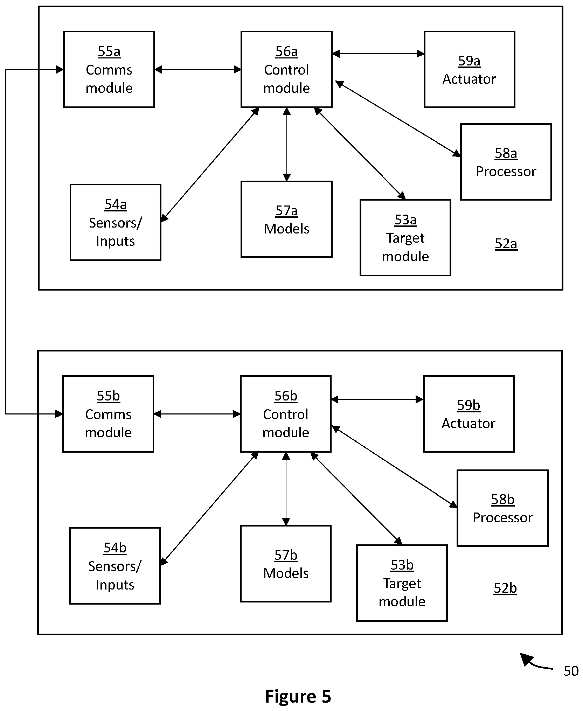

Figure 5 is a block diagram of a system, indicated generally by the reference numeral 50, in accordance with an example embodiment. The system 50 comprises a first platform 52a and a second platform 52b. The platforms 52a and 52b may, for example, be two of the platforms of the system 30 described above. Each of the platforms 52a and 52b may be able to implement the flow chart 40 described above.

The first platform 52a comprises a target module 53a, one or more sensors 54a, a communications module 55a, a control module 56a, one or more models 57a, a processor 58a and an actuator 59a. Similarly, the second platform 52b comprises a target module 53b, one or more sensors 54b, a communications module 55b, a control module 56b, one or more models 57b, a processor 58b and an actuator 59b.

The sensors 54a, 54b (or some other input) can be used for obtaining local object data relating to the respective platform, thereby implementing step 42 of the flow chart 40. The sensors may include one or more imaging devices, one or more radio frequency sensors, one or more software defined radios (SDR), one or more Intelligence, Surveillance and Reconnaissance (ISR) sensors and/or one or more radar sensors. Other sensors that could be provided will be readily apparent.

The communication modules 55a, 55b may be used to receive remote information (e.g. remote sensor data) from each of one or neighbour platforms and to provide information (such as aggregated object data) to neighbour platforms. The communication modules may thereby implement steps 43 and 45 of the flow chart 40.

The control modules 56a, 56b may be used to generate aggregated object information for the respective platform based, at least in part, on the local object data (e.g. obtained by the respective sensors 54 - see step 42) and the remote information (e.g. obtained by the respective communication module 55 - see step 43). As discussed elsewhere, the aggregated object data may be generated (by the respective control module) in accordance with a message aggregation scheme. The message aggregation scheme may comprise a model (e.g. an ML model) that may be one of the models 57a, 57b.

The target modules 53a, 53b may generate target information for one or more targets based, at least in part, on the aggregated object data. The target information may, for example, comprise target position data and/or target identification data and/or target status data.

The processors 58a, 58b may take one or more decisions based, at least in part, on the aggregated object data for the first platform. The decisions may be taken based on a model (e.g. an ML model) that may be one of the models 57a, 57b. Example decisions include changes to locations, speeds or velocities of one or more platforms, as discussed above. The processors 58a, 58b may generate target information such that the target modules 53a, 53b form part of the respective processors.

The actuators 59a, 59b may be used to implement decisions made by the respective processors. Example actuators include motors. The actuators may include mechanisms for eliminating (e.g. destroying) one or more identified targets. The sensors 54a, 54b may be used to obtain observations indicating that a particular target has been eliminated.

The communication modules 55a and 55b are connected via communication links. The communication links are typically local, short-range communication links. The communication links may be intermittent and/or unreliable and may change over time (e.g. as the respective platforms move).

It should be noted that the modules of the first platform 52a and the second platform 52b are schematic and are provided by way of example only. The modules may differ from those shown in Figure 5 (and the modules of the first and second platforms may differ from each other). For example, the functionality of some modules may be merged (such as at least some of the functionality of the control modules, the target modules and the processors). Moreover, some functionality may be omitted from one or both of the platforms shown (e.g. the processor 58 may be omitted from some platforms, for example if a particular platform does not have decision-making capabilities).

It should be noted, of course, that two platforms are shown in Figure 5 for ease of description; example implementations may include many more platforms.

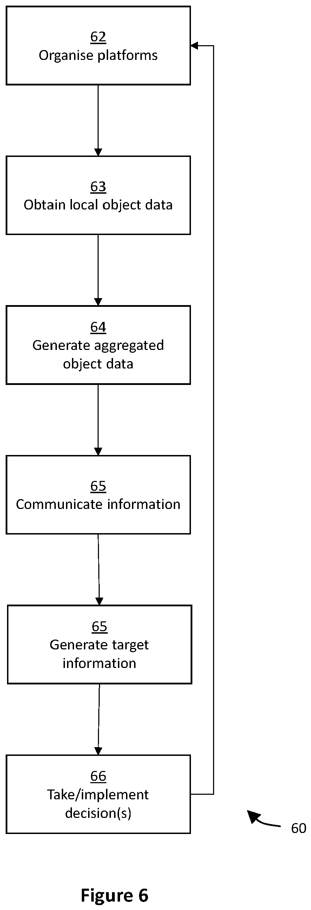

Figure 6 is a flow chart, indicated generally by the reference numeral 60, in accordance with an example embodiment.

The flow chart 60 starts at step 62, where a plurality of platforms are organised as a graph of nodes and edges. As discussed in detail above, each platform of the plurality forms one of the said nodes and said edges represent communication links between said nodes, wherein each of the plurality of platforms has a position within the graph of nodes. By way of example, the step 62 may organise the platforms 31 to 35 of the system 30 described above.

At step 63, local object data is obtained at one or more (e.g. all) of the plurality of platforms, e.g. from one or more sensors of the respective platforms. The local object data may be obtained, for example, by the sensors/inputs 54a and 54b described above. Note that some platforms of the plurality may not obtain local object data (e.g. if said platform(s) do not have the appropriate sensors or inputs).

At step 64, aggregated object data is generated locally at one or more (e.g. all) of the platforms, in accordance with a message aggregation scheme, based on the local object data obtained at the respective platform and, if available, remote information (e.g. aggregated sensor data) communicated between platforms. The message aggregation may be performed in accordance with a received model (e.g. using a model generated as a result of training, such as MADRL training, as discussed herein). The step 64 may, for example, be implemented by the control modules 56a, 56b described above.

The aggregated object information may include one or more of:
- a maximum and/or a minimum of a plurality of datapoints.
- an average of a plurality of datapoints;
- a weighted average of a plurality of datapoints;
- an average position of a plurality of sensor measurements that identify at least one of one or more target objects; and
- an average position of a plurality of sensor measurements that do not identify at least one of one or more target objects.

At step 65, information is communicated between platforms/nodes for use as said remote data (e.g. in an instance of step 64). The information may comprise aggregated sensor data. The step 64 may, for example, be implemented by the communication modules 55a, 55b.

At step 66, target information for one or more targets is generated at one or more (e.g. all) of the platforms. The target information is generated based, at least in part, on the respective aggregated object data. The target information may comprise target position data and/or target identification data and/or target status data.

At step 67, one or more decisions are taken at one or more of said platforms/nodes based, at least in part, on the target information generated at the respective node. As discussed above, an algorithm (e.g. a **ML** algorithm) may be provided to one or more of said platforms for taking said decisions. The step 66 may be implemented, for example, by the processors 58a, 58b (and may be executed by the actuators 59a, 59b). As noted above, some platforms of the plurality may omit step 66.

The one or more decisions may comprise changes to one or more of:
- a position of the first platform relative to one or more targets identified from said aggregated target data (e.g. moving towards, or away from, an identified target);
- a speed of movement of the first platform; and
- a direction of movement of the first platform.

The one or more decisions include taking an action in relation to one or more targets identified from said aggregated target data, such as eliminating or destroying the target.

The one or more decision may then be implemented, for example using actuators 59a, 59b or some similar module.

The data relating to one or more of said one or more targets may comprise one or more of: an indication of whether presence of a respective first device is detected by the respective platform; a decaying value (e.g. exponentially decay value) representing a last sighting of one of said targets by the respective platform; and a direction or location of one of said first targets detected by the first platform.

The step 66 may include obtaining information relating to the outcome of an implemented decision (e.g. whether an identified target has been eliminated). Alternatively, or in addition, the data obtained in step 63 and/or step 64 may be used to obtain information relating to the outcome of an implemented decision.

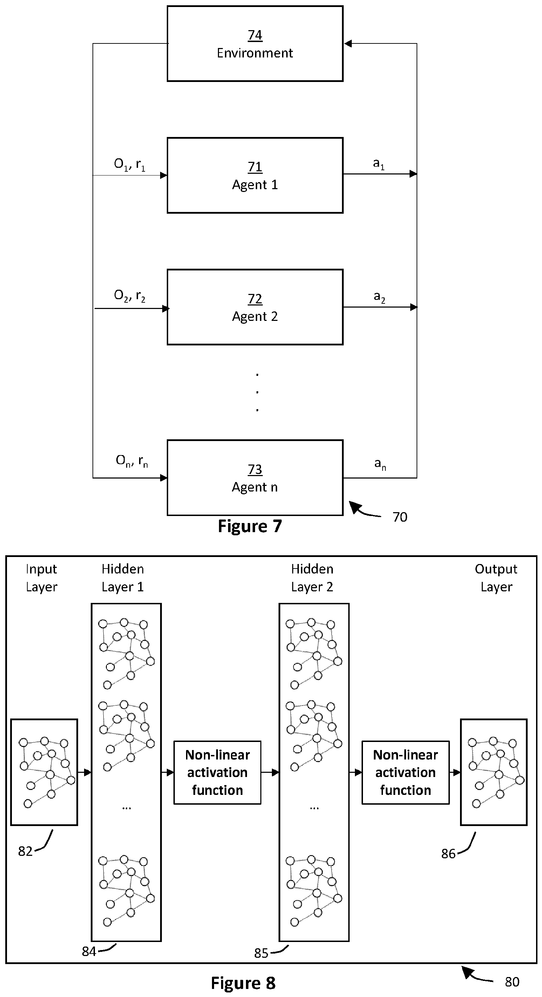

Figure 7 is a block diagram of a system model, indicated generally by the reference numeral 70, in accordance with an example embodiment. The system model 70 may be used to model systems such as the system 30 described above.

The system model 70 comprises a plurality of agents, including a first agent 71, a second agent 72 and an nth agent 73, and also includes an environment 74. Each agent represents one of the platforms described above and the environment 74 represents the environment (including the electromagnetic environment) in which the platforms operate.

Each agent receives an input from the environment 74 and provides an output to the environment. Within the diagram, *oᵢ* represents the local observation for each agent i. Upon receiving an observation each agent i takes an action *aᵢ*. During training rewards *rᵢ* can be used to train AI agents using incentive-based learning approaches, e.g., reinforcement learning or genetic algorithms, as discussed further below.

Using the environment, the agents are trained in accordance with machine learning principles to modify the functionality of the system that the system model 70 is modelling. For example, the agents can be trained to maximise rewards when defining what the agents do within the environment 74, including how the agents react to targets. For example, positive rewards can be returned by the training environment for actions resulting in an identified target being destroyed.

The models describing the agents 71 to 73 can be provided to respective platforms and may be stored as the models 57 described above.

By way of example, the agents 71 to 73 may describe trainable message aggregation schemes that can be used to generate the aggregated object data in step 44 of the algorithm 40 and step 64 of the algorithm 60. Alternatively, or in addition, the agents 71 to 73 may describe decision-making algorithms used in step 47 of the algorithm 40 and step 66 of the algorithm 60.

Figure 8 shows a neural network, indicated generally by the reference numeral 80, used in some example embodiments. For example, the neural network 80 may be used to describe the agents 71 to 73 described above and may be the models 57 of the platforms 52 described above.

The neural network 80 comprises a first layer 82, one or more hidden layers 84, 85, and an output layer 86. Input data (such as sensor data and/or remote information, such as aggregated data) may be provided to the first layer 82. Processed data, such as aggregated sensor data, may be output by the output layer 86.

Parameters of the neural network 80 can be updated in accordance with machine-learning principles to modify the performance of the model (and thereby to modify the performance of the respective agent). For example, as discussed above, the agents can be trained to maximise rewards when defining what the agents do within the environment 74, including how the agents react to one or more targets.

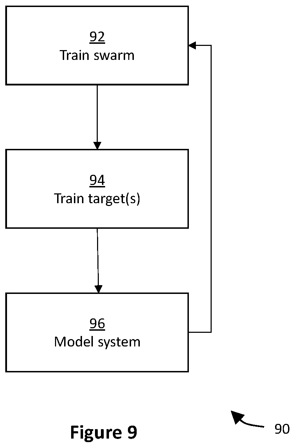

Figure 9 is a flow chart, indicated generally by the reference numeral 90, in accordance with an example embodiment. The flow chart 90 may be used to train functionality within a system, such as the system 30 described above.

The flow chart 90 starts at step 92, where a plurality (e.g. a swarm) of platforms is trained. At step 94, an expected functionality of one or more targets that the swarm is intended to interact with is trained. The step 94 may, for example, anticipate how targets may react to the trained functionality of the swarm. A system including the platforms trained in step 92 and the one or more targets trained in step 94 is modelled in step 96. The flow chart then returns to step 92 so that the swarm and target training can be updated.

It should be noted that some of the steps over the flow chart 90 may be omitted. For example, the functionality of the target(s) may not be adjustable so that the step 94 may be omitted.

The training regime of Figure 9 may be used to iteratively improve strategies for the swarm of platforms (step 92) and strategies for target devices (step 94). Adversarial learning frameworks guided by solution concepts from game theory can result in policies that can generalise across different types of adversary. If well designed, such a development-evaluation environment can provide a good representation of real setting in which platforms may be deployed in practice.

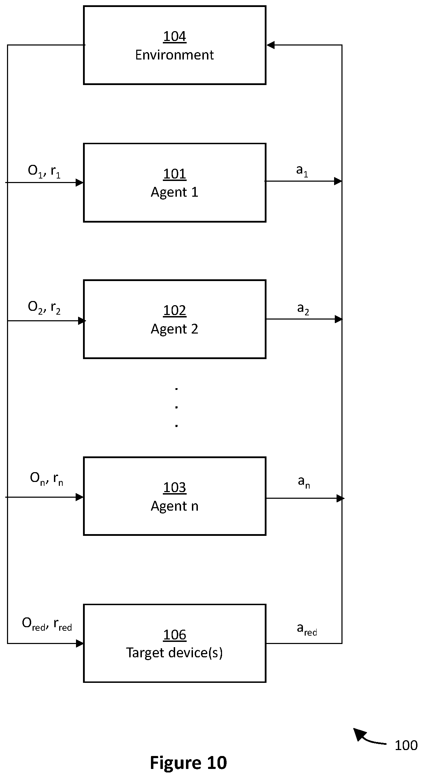

Figure 10 is a block diagram of a system model, indicated generally by the reference numeral 100, in accordance with an example embodiment. The system model 100 may be used in an implementation of the algorithm 90 described above.

The system model 100 comprises a plurality of agents, including a first agent 101, a second agent 102 and an nth agent 103 (which may be similar to the first agent 71, the second agent 72 and the nth agent 73 of the system model 70 described above). The system model 100 includes an environment 104 (similar to the environment 74). One or more target devices are modelled schematically by the target device(s) 106. Note that the target device(s) may comprises a plurality of models (e.g. modelling different target devices).

Each agent 101-103 and target model 106 receives an input from the environment 104 and provides an output to the environment. At least some of the agents and the target device(s) are trained in accordance with machine learning principles to adjust the functionality of the system that the system model 100 is modelling (thereby implementing steps 92 and 94 of the algorithm 90. The environment 104 can also be trained, as discussed above.

As discussed above, the agents can be trained to maximise rewards when defining what the agents do within the environment 104, including how the agents react to one or more targets. Similarly, the targets can be trained to maximise rewards when defining what the targets might do within the environment 104. For example, positive rewards can be returned to the agents for actions resulting in an identified target being destroyed. Similarly, positive rewards can be returned to target device(s) for actions resulting in the respective target not being destroyed.

The models describing the agents 101 to 103 can be provided to respective platforms and may, for example, be stored as the models 57 described above.

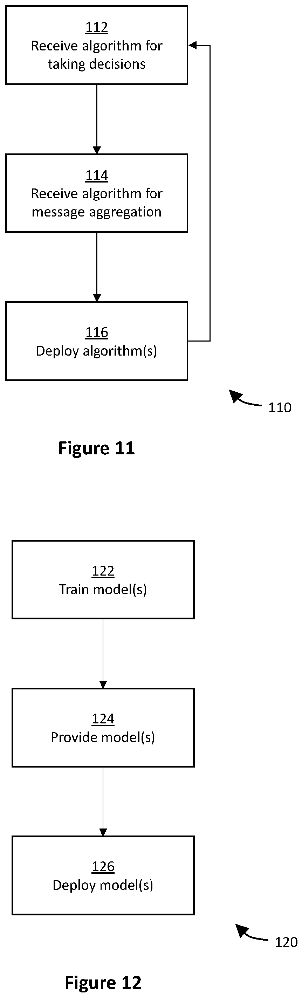

Figure 11 is a flow chart, indicated generally by the reference numeral 110, in accordance with an example embodiment. The flow chart 110 may be implemented at one or more of the platforms described herein.

The flow chart 110 starts at step 112, where the platform receives an algorithm (e.g. a machine-learning algorithm) for taking decisions. The algorithm may be a MADRL algorithm trained in accordance with the principles outlined above, a hard-coded algorithm or a combination thereof (e.g. a hybrid model).

At step 114, the platform receives an algorithm (e.g. a machine-learning algorithm) for implementing a message aggregation scheme. Such a message aggregation scheme may be used to generated aggregated data (e.g. aggregated object data) as discussed in detail above. The algorithm could be machine-learning based (e.g. where each "hop" described above is a GNN layer, with learnt parameters), rules-based (e.g. using hand-coded algorithms), or a hybrid approach could be used (e.g. here a hop could be either rules-based or machine-learning).

At step 116, the algorithms received in steps 112 and 114 are deployed at the respective platform.

Figure 12 is a flow chart, indicated generally by the reference numeral 120, in accordance with an example embodiment. The flow chart 120 may be used to generate one or more of the algorithms referred to in the flow chart 110.

The flow chart 120 starts at step 122, where models for taking decisions at one or more platforms and for implementing a message aggregation scheme at one or more platforms are trained. The algorithms generated in the step 122 may be modifications of pre-existing algorithms or may be generated from scratch. At step 124, the trained models are provided to one or more platforms (thereby implementing steps 112 and 114 of the algorithm 110 described above). At step 126, the algorithms are deployed at one or more platforms.

Of course, the flow charts 110 and 120 are schematic and may be implemented in other ways. For example, the steps 112 and 114 of the flow chart 110 could be implemented in a different order or at the same time, or one of the steps 112 and 114 may be omitted.

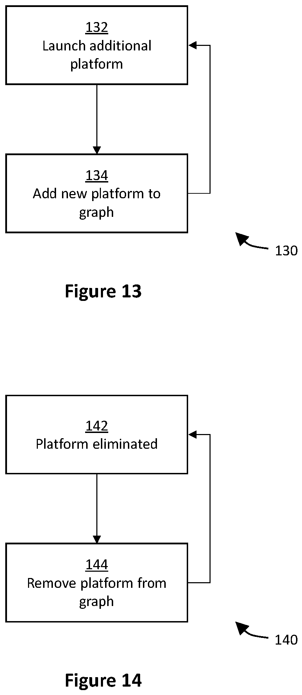

Figure 13 is a flow chart, indicated generally by the reference numeral 130, in accordance with an example embodiment. The flow chart 130 starts at step 132 where an additional platform (e.g. an additional uncrewed vehicle) is launched. At step 134, the additional platform is added to a graph of nodes and edges of an existing plurality of platforms. In this way, one or more additional platforms can be added to an existing swarm of platforms. This may add existing functionality to an existing swarm.

Figure 14 is a flow chart, indicated generally by the reference numeral 140, in accordance with an example embodiment. The flow chart 140 starts at step 142 where a platform is eliminated. At step 144, the eliminated platform is removed from a graph of nodes and edges of an existing plurality of platforms. By way of example, an existing platform of a swarm may be lost due to damage or destroyed by enemy action or in some other way.

The flow charts 130 and 140 demonstrate the ad-hoc nature of groups/swarms of platforms in some example embodiments.

Advantages of at least some of the embodiments described herein include the provision of:
- Adaptable swarms of platforms that can response to changes in a scene and to changes in an electromagnetic environment.
- Scalable and modular systems in which the size of a swarm can be changed.
- Low cost solutions by providing relatively low-cost platforms.
- Resilient systems that can adapt to the loss of one or more platforms and/or to the loss of one or more communication links.
- Versatile solutions that can, for example, transition between different terrains by deploying suitable platform or uncrewed vehicle types (e.g. uncrewed aerial vehicles, uncrewed ground vehicles, uncrewed underwater vehicles etc.).
- Autonomous devices allowing on-edge implementation (i.e. at individual platforms).
- Locally deployed algorithms that seek to provide high performance, even in congested and contested operational theatres.
- Reduced risk of revealing location of operators or control sensors due to the distributed communications and control.
- Allows the controlled platforms to form a closed-loop with the operational environment such that the impact of the platforms actions on the operational environment can be continuously assessed and utilised to guide the future actions of the one or more of the controlled platforms.

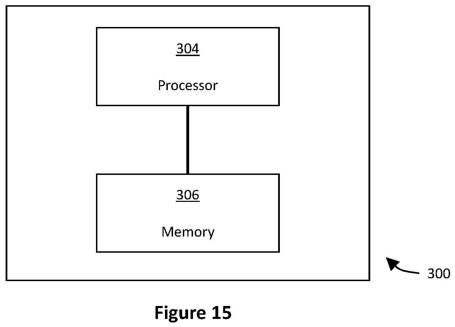

Figure 15 shows a system 300 (comprising a memory 306 and processor 304) that can be used in implementations of example embodiments described herein. The processor 304 (e.g. a CPU) may store a computer program for implementing aspects of one or more of the algorithms described herein (such as the flow charts 20, 40, 60, 90, 110, 120, 130 or 140 described above). In practice, the processor 304 is likely to be a digital signal processor (DSP) including processing blocks such as multipliers, adder/subtractors, and storage registers. The processing may be performed in parallel using pipelines and local registers to enable a high processing rate and data throughput.

Embodiments of the components described herein can be implemented using any suitable software, hardware or firmware applications, programming language, data editors, etc., and may be represented/stored/processed using any suitable data structures, and so on.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method comprising:
obtaining, at a first platform, local object data based, at least in part, on data from one or more sensors of the first platform;
receiving, at the first platform, remote information from each of one or neighbour platforms, wherein the first platform and the one or more neighbour platforms form at least a part of a plurality of platforms organised as a graph of nodes and edges, wherein each platform of the plurality forms one of the said nodes and said edges represent communication links between said nodes, wherein the first platform has a position within the graph of nodes;
generating, at the first platform, aggregated object data for the first platform based on the local object data and the remote information in accordance with a message aggregation scheme;
providing information to one or more of said neighbour platforms for use as remote information by said neighbour platforms;
generating, at the first platform, target information for one or more targets based, at least in part, on the aggregated object data, wherein the target information comprises target position data and/or target identification data;
and
taking one or more decisions based, at least in part, on said target information.

2. The method of claim 1, wherein:
the remote information received from each said one or more neighbour platforms comprises aggregated object data; and/or
the information provided to said one or more neighbour platforms comprises aggregated object data.

3. The method of any one of the preceding claims, further comprising:
receiving an algorithm for taking one or more of said decisions; and/or
receiving an algorithm for implementing said message aggregation scheme.

4. The method of any one of the preceding claims, wherein the local object data comprises one or more of:
a position of one or more other platforms of the plurality;
a direction from the first platform to each of one or more detected objects;
a direction from the first platform to each of one or more neighbour platforms;
movement data for the first platform;
a monotonically decaying value representing a last sighting of each of one or more detected objects;
an identity of each of one or more detected objects;
an object type of each of one or more detected objects; and
a node degree indicating a number of neighbour platforms in communication with the first platform.

5. The method of any one of the preceding claims, wherein the aggregated object data for the first platform includes data relating to the platforms of the plurality, including the first platform, wherein the data relating to the platforms of the plurality optionally comprises one or more of: a location of the respective platform; movement data relating to the respective platform; and a bearing of one or more of said targets from the respective platform.

6. The method of any one of the preceding claims, wherein generating said aggregated object data for the first platform comprises one or more of:
determining a maximum and/or a minimum of a plurality of datapoints;
generating an average of a plurality of datapoints;
generating a weighted average of a plurality of datapoints;
determining an average position of a plurality of sensor measurements that identify at least one of one or more targets; and
determining an average position of a plurality of sensor measurements that do not identify at least one of one or more targets.

7. A method comprising:
organising a plurality of platforms as a graph of nodes and edges, wherein each platform of the plurality forms one of the said nodes and said edges represent communication links between said nodes;
obtaining local object data at one or more of said plurality of platforms based on data from one or more sensors of the respective platforms;
communicating information between platforms;
locally generating, at one or more of said platforms, aggregated object data for the respective platform based on the respective local object data and the information communicated between platforms, in accordance with a message aggregation scheme;
locally generating, at one or more of said platforms, target information for one or more targets based, at least in part, on the respective aggregated object data, wherein the target information comprises target position data and/or target identification data; and
taking one or more decisions at one or more of said platforms based, at least in part, on the target information generated at the respective platform.

8. The method of claim 7, further comprising:
providing an algorithm for taking said decisions to one or more of said platforms, wherein the method optionally further comprises training said algorithm for taking said decisions.

9. The method of claim 7 or claim 8, wherein the information communicated between platforms comprises aggregated object data generated at the respective platforms.

10. The method of any one of claims 7 to 9, wherein said aggregated object information is based on one or more of:
a maximum and/or a minimum of a plurality of datapoints;
an average of a plurality of datapoints;
a weighted average of a plurality of datapoints;
an average position of a plurality of sensor measurements that identify at least one of one or more targets; and
an average position of a plurality of sensor measurements that do not identify at least one of one or more targets.

11. The method of any one of claims 7 to 10, further comprising:
providing an algorithm for implementing said message aggregation scheme to one or more of said platforms, wherein the method optionally further comprises training said algorithm for implementing said message aggregation scheme.

12. The method of any one of the preceding claims, wherein:
said one or more decisions comprises changes to one or more of: a position of the first platform relative to one or more targets identified from said aggregated target data; a speed of movement of the first platform; and a direction of movement of the first platform; and/or
said one or more decisions include taking an action in relation to one or more targets identified from said aggregated target data; and/or
said one or more decisions are based, in part, on outcomes of preceding actions.

13. The method of any one of the preceding claims, wherein:
the target information comprises target status data; and/or
the one or more sensors comprises one or more of: one or more imaging devices; one or more radio frequency sensors; and one or more radar sensors; and/or
said communication links are local, short-range communication links.

14. A first platform comprising:
one or more sensors for obtaining local object data relating to the first platform;
a communication module for receiving remote information from each of one or more neighbour platforms and for providing information to one of more of said neighbour platforms, wherein the first platform and the one or more neighbour platforms form at least a part of a plurality of platforms organised as a graph of nodes and edges, wherein each platform of the plurality forms one of the said nodes and said edges represent communication links between said nodes, wherein the first platform has a position within the graph of nodes;
a control module for generating aggregated object information for the first platform based on the local object data and the remote information in accordance with a message aggregation scheme;
a target module for generating target information for one or more targets based, at least in part, on the aggregated object data, wherein the target information comprises target position data and/or target identification data; and
a processor for taking one or more decisions based, at least in part, on said the aggregated target information for the first platform.

15. The first platform of claim 14, wherein:
the first platform is an uncrewed aerial vehicle, an uncrewed ground vehicle or an uncrewed underwater vehicle; and/or
the one or more sensors comprise one or more of: one or more imaging devices; one or more radio frequency sensors; and one or more radar sensors.
